# EUROPEAN PATENT APPLICATION

(11) **EP 4 678 860 A1**
(43) Date of publication of application: **14.01.2026**
(21) Application number: 24858102.7
(22) Date of filing: 15.07.2024
(51) Int. Cl.: E05B 77/12, E05B 81/90

(54) **ELECTRIC DOOR CONTROL SYSTEM AND CONTROL METHOD, AND VEHICLE**

(30) Priority: 31.08.2023 CN 202311117960
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: WANG, Dong, Hangzhou, Zhejiang 310051 (CN); ZHANG, Baohang, Hangzhou, Zhejiang 310051 (CN); WU, Jing, Hangzhou, Zhejiang 310051 (CN); LYU, Tingting, Hangzhou, Zhejiang 310051 (CN); WANG, Miao, Hangzhou, Zhejiang 310051 (CN); WANG, Pengxiang, Hangzhou, Zhejiang 310051 (CN); ZHOU, Dayong, Hangzhou, Zhejiang 310051 (CN)
(74) Representative: Range, Christopher William
(86) International application number: PCT/CN2024/105555
(87) International publication number: WO 2025/044558

(57) **Abstract**

Provided is a control system for an electric door. The control system for the electric door includes a door switch (110), a door unlocking module (120), a door control module (130), and a central controller (140). Each of the door switch (110), the door unlocking module (120), and the door control module (130) is connected to the central controller (140). The central controller (140) is configured to obtain, in response to receiving a vehicle collision signal and a door opening signal of the door switch (110), a state of the door unlocking module (120) and a state of the door control module (130), and transmit a door unlocking instruction and a door opening permission instruction to the door unlocking module (120) when the door unlocking module (120) is in an online state and the door control module (130) is in an offline state. The door unlocking module (120) is configured to, in response to receiving the door unlocking instruction and the door opening permission instruction, control an electric door to be unlocked and drive the electric door to open by a first distance, to enable a user to manually pull open the electric door. The present disclosure further relates to a vehicle including the above control system and a control method for an electric door.

## Description

### CROSS-REFERENCE TO RELATED APPLICATION

This application claims priority to Chinese Patent Application No. 202311117960.1, titled "CONTROL SYSTEM AND CONTROL METHOD FOR ELECTRIC DOOR, AND VEHICLE" and filed on August 31, 2023, the entire content of which is incorporated herein by reference.

### FIELD

The present disclosure relates to the field of vehicle technologies, and more particularly, to a control system for an electric door, a vehicle, and a control method for an electric door.

### BACKGROUND

Vehicle collision safety performance has received widespread attention. Vehicle collisions are typically categorized into frontal collisions, side collisions, rear collisions, rollovers, and pedestrian collisions. After a collision occurs, doors of the vehicle need to be unlocked to facilitate occupant escape and external rescue. With the rapid development of the new energy vehicle market, domestic and international automakers have invested substantial manpower and resources into researching and developing new energy vehicles, including hybrid electric vehicles. An increasing number of vehicle models are adopting power-operated doors or flush door handles. This configuration places increasingly high demands on an ability of doors to open properly after a collision.

Compared with a conventional door, an electric door relies on an ejection motor, unlocking of a door lock motor, or the like to realize opening of the electric door, making an opening process more complex and demanding higher performance. However, in existing vehicles, electric doors may fail to be unlocked or open properly after a collision occurs, trapping occupants inside the vehicle for a long period of time, and endangering their personal safety in severe cases.

### SUMMARY

The present disclosure aims to solve at least one of the technical problems in the related art to some extent. To this end, a first objective of the present disclosure is to provide a control system for an electric door. Through a door unlocking module, an electric door is controlled to be unlocked and driven to open by a first distance, in response to receiving a door unlocking instruction and a door opening permission instruction, in such a manner that a user can manually pull open the electric door. In this way, problems with unlocking and opening of the electric door under collision and extreme collision conditions are solved, improving reliability of the unlocking and the opening of the electric door.

A second objective of the present disclosure is to provide a vehicle.

A third objective of the present disclosure is to provide a control method for an electric door.

To achieve the above objectives, according to an embodiment in a first aspect of the present disclosure, a control system for an electric door is provided. The system includes: a door switch, a door unlocking module, a door control module, and a central controller. Each of the door switch, the door unlocking module, and the door control module is connected to the central controller. The central controller is configured to obtain, in response to receiving a vehicle collision signal and a door opening signal of the door switch, a state of the door unlocking module and a state of the door control module, and transmit a door unlocking instruction and a door opening permission instruction to the door unlocking module when the door unlocking module is in an online state and the door control module is in an offline state. The door unlocking module is configured to, in response to receiving the door unlocking instruction and the door opening permission instruction, control the electric door to be unlocked and drive the electric door to open by a first distance, to enable a user to manually pull open the electric door.

With the control system for the electric door according to the embodiment of the present disclosure, the central controller is configured to obtain, in response to receiving the vehicle collision signal and the door opening signal of the door switch, the state of the door unlocking module and the state of the door control module, and transmit the door unlocking instruction and the door opening permission instruction to the door unlocking module when the door unlocking module is in the online state and the door control module is in the offline state. The door unlocking module is configured to, in response to receiving the door unlocking instruction and the door opening permission instruction, control the electric door to be unlocked and drive the electric door to open by the first distance, to enable the user to manually pull open the electric door. Thus, the control system can solve the problems with the unlocking and the opening of the electric door under the collision and extreme collision conditions, improving the reliability of the unlocking and the opening of the electric door.

In addition, the control system for the electric door according to the above embodiment of the present disclosure can further have the following additional technical features.

According to an embodiment of the present disclosure, the door switch is further connected to the door unlocking module; and the door unlocking module is further configured to, in response to receiving the door opening signal, the door unlocking instruction, and the door opening permission instruction, control the electric door to be unlocked and drive the electric door to open by the first distance.

According to an embodiment of the present disclosure, the central controller is further configured to transmit, when each of the door unlocking module and the door control module is in the online state, the door unlocking instruction to the door unlocking module and the door opening permission instruction to the door control module; the door unlocking module is further configured to control, in response to receiving the door unlocking instruction, the electric door to be unlocked; and the door control module is further configured to control, in response to receiving the door opening permission instruction, the electric door to open by a second distance, to enable automatic opening of the electric door, where the second distance is greater than the first distance.

According to an embodiment of the present disclosure, the door switch is further connected to each of the door unlocking module and the door control module. The door unlocking module is further configured to control, in response to receiving the door opening signal and the door unlocking instruction, the electric door to be unlocked. The door control module is further configured to control, in response to receiving the door opening signal and the door opening permission instruction, the electric door to open by the second distance.

According to an embodiment of the present disclosure, the central controller is further configured to transmit, in response to receiving a central control virtual unlocking instruction, a door handle deployment instruction to the door unlocking module; and the door unlocking module is further configured to control, in response to receiving the door handle deployment instruction, a door handle to deploy.

According to an embodiment of the present disclosure, the door unlocking module is further configured to: receive deployment feedback information of the door handle; and continuously control the door handle to deploy until the door handle is correctly deployed and control the door handle to remain in a deployed state, in response to receiving no deployment feedback information or determining that the door handle has not been correctly deployed based on the deployment feedback information.

According to an embodiment of the present disclosure, the system further includes a collision controller, the central controller being further connected to the collision controller. The collision controller is configured to, in response to receiving the vehicle collision signal, obtain a state of the electric door and a vehicle state, perform timing, and transmit the central virtual unlocking instruction to the central controller. The collision controller is further configured to transmit, when the timing reaches a predetermined time period, the state of the electric door is a locked state, the vehicle state is a stationary state or no vehicle speed signal is received, and after central control virtual unlocking is successful, the vehicle collision signal to the central controller.

According to an embodiment of the present disclosure, the door unlocking module is further configured to: transmit the door unlocking instruction to a door lock motor of the electric door, to control the electric door to be unlocked; obtain a state of the electric door when a quantity of transmissions of the door unlocking instruction reaches a predetermined quantity; and stop transmitting the door unlocking instruction to the door lock motor of the electric door when the state of the electric door is an unlocked state.

To achieve the above objectives, according to an embodiment in a second aspect of the present disclosure, a vehicle is provided. The vehicle includes the above control system for the electric door.

By including the above control system for the electric door, the vehicle according to the embodiment of the present disclosure can solve the problems with the unlocking and the opening of the electric door under the collision and extreme collision conditions, improving the reliability of the unlocking and the opening of the electric door.

To achieve the above objectives, according to an embodiment in a third aspect of the present disclosure, a control method for an electric door is provided. The method includes: in response to receiving a vehicle collision signal and a door opening signal, obtaining a state of a door unlocking module and a state of a door control module; and when the door unlocking module is in an online state and the door control module is in an offline state, transmitting a door unlocking instruction and a door opening permission instruction to the door unlocking module, in such a manner that the door unlocking module is enabled to control the electric door to be unlocked and drive the electric door to open by a first distance, to allow the electric door to be manually pulled open.

With the control method for an electric door according to the embodiment of the present disclosure, the state of the door unlocking module and the state of the door control module are obtained in response to receiving the vehicle collision signal and the door opening signal. When the door unlocking module is in the online state and the door control module is in the offline state, the door unlocking instruction and the door opening permission instruction are transmitted to the door unlocking module, in such a manner that the door unlocking module is enabled to control the electric door to be unlocked and drive the electric door to open by the first distance, to allow the electric door to be manually pulled open. Thus, the method can solve the problems with the unlocking and the opening of the electric door under the collision and extreme collision conditions, improving the reliability of the unlocking and the opening of the electric door.

Additional aspects and advantages of the present disclosure will be provided at least in part in the following description, or will in part become apparent from the following description or be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic block diagram of a control system for an electric door according to an embodiment of the present disclosure.
FIG. 2 is a schematic modular flowchart of a control method for an electric door according to an embodiment of the present disclosure.
FIG. 3 is a schematic block diagram of a vehicle according to an embodiment of the present disclosure.
FIG. 4 is a flowchart of a control method for an electric door according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

A control system for an electric door, a vehicle, and a control method for an electric door according to the embodiments of the present disclosure will be described below with reference to the accompanying drawings.

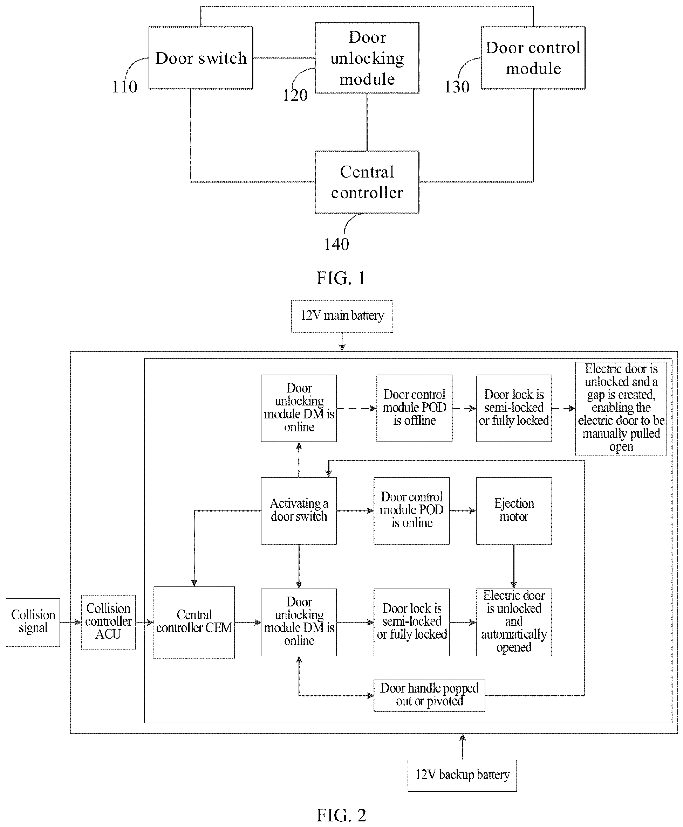

FIG. 1 is a schematic block diagram of a control system for an electric door according to an embodiment of the present disclosure.

As illustrated in FIG. 1, the control system for the electric door can include a door switch 110, a door unlocking module 120, a door control module 130, and a central controller 140.

Each of the door switch 110, the door unlocking module 120, and the door control module 130 is connected to the central controller 140. The central controller 140 is configured to obtain, in response to receiving a vehicle collision signal and a door opening signal of the door switch 110, a state of the door unlocking module 120 and a state of the door control module 130, and transmit a door unlocking instruction and a door opening permission instruction to the door unlocking module 120 when the door unlocking module 120 is in an online state and the door control module 130 is in an offline state. The door unlocking module 120 is configured to, in response to receiving the door unlocking instruction and the door opening permission instruction, control an electric door to be unlocked and drive the electric door to open by a first distance, to enable a user to manually pull open the electric door. The first distance can be determined as desired.

Specifically, the door switch 110 can be a switch button on a door handle. When a user intends to get off the vehicle and presses the button, the door opening signal is generated and transmitted to the central controller 140 to control opening of the door. In some embodiments, the door switch 110 can be an external opening button. The external opening button is located at an independent position and can be arranged in an upper region of a B-pillar of the vehicle. Additionally, if the external opening button is integrated with a flush door handle, the external opening button can be used through pressing after the door handle pops out. The door switch 110 can also include an internal opening button, which can be arranged at a central console region, the electric door, etc., and used by the user (e.g., a driver or a passenger) through pressing. For ordinary door handles that do not contain the switch button, the door opening signal can be generated when the driver, the passenger, or another person pulls the door handle.

The door unlocking module 120 can be a four-door control module, such as a Door Module (DM). The door unlocking module 120 can be configured to control a usage status of the electric door of the vehicle. For example, the door unlocking module 120 can be configured to control locking or unlocking of the electric door and opening or closing of a vehicle window. Additionally, if the vehicle is equipped with the flush door handle, the door unlocking module 120 can be further configured to control popping out, retraction, or the like of the door handle. The door control module 130 can be a Power Operation Door (POD), which can drive an ejection motor, to drive the door to be pushed open. The central controller 140 can be a central electronic control module, such as a Central Electronic Module (CEM). The central controller 140 can be configured to adjust, control, or perform other operations on parameters of various devices within the vehicle through receiving signals. In the embodiments of the present disclosure, the central controller 140 can be configured to receive the vehicle collision signal and transmit the vehicle collision signal to each of the door switch 110, the door unlocking module 120, and the door control module 130.

The central controller 140 can be configured to obtain, in response to receiving the vehicle collision signal and the door opening signal of the door switch 110, the state of the door unlocking module 120 and the state of the door control module 130. Each of the state of the door unlocking module 120 and the state of the door control module 130 includes an online state and an offline state. The online state means communication between the central controller 140 and each of the door unlocking module 120 and the door control module 130 is normal, while the offline state means communication between the central controller 140 and each of the door unlocking module 120 and the door control module 130 is abnormal. The states of the door unlocking module 120 and the door control module 130 are determined separately. When the door unlocking module 120 is in the online state and the door control module 130 is in the offline state, i.e., when communication between the door unlocking module 120 and the central controller 140 is normal, but communication between the door control module 130 and the central controller 140 is abnormal (for example, the door control module 130 fails), the door unlocking instruction and the door opening permission instruction can be transmitted to the door unlocking module 120. That is, both unlocking and opening of the electric door are controlled by the door unlocking module 120. It should be noted that the central controller 140 can be configured to repeatedly transmit the door unlocking instruction and the door opening permission instruction to the door unlocking module 120 within a predetermined period of time to prevent failures in instruction transmission.

When the door unlocking module 120 receives the door unlocking instruction and the door opening permission instruction, the electric door can be controlled to be unlocked. Thus, after the electric door is unlocked, a latch can be driven by a door lock motor, to open the electric door by the first distance, to enable the user to manually pull open the electric door. For example, the latch can be driven by the door lock motor to create a 2-centimeter gap, through which the user can manually pull the electric door to open the electric door.

Thus, by having the door unlocking module 120 configured to control the electric door to be unlocked and drive the electric door to open by the first distance in response to receiving the door unlocking instruction and the door opening permission instruction, to enable the user to manually pull open the electric door, problems with the unlocking and the opening of the electric door under collision and extreme collision conditions are solved, improving reliability of the unlocking and the opening of the electric door.

According to an embodiment of the present disclosure, the door switch 110 is further connected to the door unlocking module 120. The door unlocking module 120 is further configured to, in response to receiving the door opening signal, the door unlocking instruction, and the door opening permission instruction, control the electric door to be unlocked and drive the electric door to open by the first distance.

Specifically, for safety considerations and to improve reliability of the control system for the electric door, the door switch 110 needs to be connected to the door unlocking module 120. That is, when the door unlocking module 120 controls the electric door to be unlocked, a current state of the door switch 110 needs to be taken into account. For example, after a vehicle collision occurs, to avoid secondary injuries to the driver and the passenger, the driver and the passenger need to observe a surrounding environment. After they confirm that the surrounding environment is safe, they can operate the door switch 110, e.g., by pressing a switch on the door handle (the door handle is equipped with the internal opening button) to open the electric door. Similarly, a rescuer can press a switch on the door handle (an exterior door handle is equipped with the external opening button) to open the electric door. Thus, when the door unlocking module 120 receives the door opening signal, the door unlocking instruction, and the door opening permission instruction, the electric door is controlled to be unlocked. After the electric door is unlocked, the latch can be driven by the door lock motor to open the electric door by the first distance, to enable the user to manually pull open the electric door. For example, the latch can be driven by the door lock motor to create a 1.5-centimeter gap, through which the user can manually pull the electric door to open the electric door.

In some embodiments, the surrounding environment can be captured by a camera on the vehicle body to determine whether the surrounding environment is safe. Thus, when the surrounding environment is determined to be safe, the door opening signal generated by the driver and the passenger operating the door switch 110 is validated, ensuring safety of the driver and the passenger. When the surrounding environment is determined to be unsafe, the door opening signal generated by the driver and the passenger operating the door switch 110 can be invalidated, preventing the electric door from being unlocked and opened.

According to an embodiment of the present disclosure, the central controller 140 is further configured to transmit, when each of the door unlocking module 120 and the door control module 130 is in the online state, the door unlocking instruction to the door unlocking module 120 and the door opening permission instruction to the door control module 130. The door unlocking module 120 is further configured to control, in response to receiving the door unlocking instruction, the electric door to be unlocked. The door control module 130 is further configured to control, in response to receiving the door opening permission instruction, the electric door to open by a second distance, to enable automatic opening of the electric door. The second distance is greater than the first distance.

Specifically, the central controller 140 is configured to determine the state of each of the door unlocking module 120 and the door control module 130. When both the door unlocking module 120 and the door control module 130 are in the online state, i.e., when the communication between the central controller 140 and each of the door unlocking module 120 and the door control module 130 is normal, the central controller 140 can be configured to transmit the door unlocking instruction to the door unlocking module 120 and the door opening permission instruction to the door control module 130. That is, the electric door is unlocked by the door unlocking module 120 and opened by the door control module 130. It should be noted that the central controller 140 can be configured to repeatedly transmit the door unlocking instruction to the door unlocking module 120 and the door opening permission instruction to the door control module 130 within a predetermined period of time to prevent failures in instruction transmission.

When the door unlocking module 120 receives the door unlocking instruction, the electric door can be controlled to be unlocked. Thus, after the electric door is unlocked and when the door control module 130 receives the door opening permission instruction, the electric door can be controlled to open by the second distance. For example, the door control module 130 can be configured to drive the ejection motor to push the electric door open by the second distance, to enable the automatic opening of the electric door. It should be noted that the second distance can be determined as desired. For example, the second distance by which the electric door opens may be set as a distance required for the driver and the passenger to normally get off the vehicle, or may be set as a maximum opening distance of the electric door.

According to an embodiment of the present disclosure, the door switch 110 is further connected to each of the door unlocking module 120 and the door control module 130. The door unlocking module 120 is further configured to control, in response to receiving the door opening signal and the door unlocking instruction, the electric door to be unlocked. The door control module 130 is further configured to control, in response to receiving the door opening signal and the door opening permission instruction, the electric door to open by the second distance.

Specifically, for safety considerations and to improve the reliability of the control system for the electric door, the door switch 110 needs to be connected to each of the door unlocking module 120 and the door control module 130. That is, when the door unlocking module 120 controls the electric door to be unlocked or the door control module 130 controls the electric door to open, the current state of the door switch 110 needs to be taken into account. For example, after a vehicle collision occurs, to avoid secondary injuries to the driver and the passenger, the driver and the passenger need to observe the surrounding environment. After they confirm that the surrounding environment is safe, they can operate the door switch 110, e.g., by pressing a switch on the door handle (an interior door handle is equipped with the internal opening button) to open the electric door. Similarly, the rescuer can press a switch on the door handle (the exterior door handle is equipped with the external opening button) to open the electric door. Thus, when the door unlocking module 120 receives the door opening signal and the door unlocking instruction, the electric door can be controlled to be unlocked. In this way, after the electric door is unlocked and when the control module receives the door opening signal and the door opening permission instruction, the electric door can be controlled to open by the second distance. For example, the door control module 130 can be configured to drive the ejection motor to push the electric door open by the second distance, to enable the automatic opening of the electric door.

In some embodiments, the surrounding environment can be captured by the camera on the vehicle body to determine whether the surrounding environment is safe. Thus, when the surrounding environment is determined to be safe, the door opening signal generated by the driver and the passenger operating the door switch 110 is validated, ensuring the safety of the driver and the passenger. When the surrounding environment is determined to be unsafe, the door opening signal generated by the driver and the passenger operating the door switch 110 can be invalidated, preventing the electric door from being unlocked and opened.

According to an embodiment of the present disclosure, the central controller 140 is further configured to transmit, in response to receiving a central control virtual unlocking instruction, a door handle deployment instruction to the door unlocking module 120; and the door unlocking module 120 is further configured to control, in response to receiving the door handle deployment instruction, a door handle to deploy.

Specifically, the central controller 140 is further configured to transmit, in response to receiving the central control virtual unlocking instruction, the door handle deployment instruction to the door unlocking module 120. The central control virtual unlocking instruction can be an instruction received by the central controller 140 in response to determining that a vehicle collision occurs. Thus, when the vehicle collision occurs, the central controller 140 transmits the door handle deployment instruction to the door unlocking module 120. When the door unlocking module 120 further receives the door handle deployment instruction, the door handle can be controlled to deploy, facilitating an operation by the driver or the passenger, or allowing the rescuer to open the electric door outside the vehicle after the vehicle collision, to rescue the driver or the passenger in the vehicle.

In some embodiments, the door handle is a flush door handle. If the door handle fails to deploy promptly after the vehicle collision, the driver, the passenger, or the rescuer may fail to open the electric door promptly. If the electric door cannot be opened promptly, the driver and the passenger are likely to miss optimal time for escape or rescue. Therefore, when the central control virtual unlocking instruction is received, the door unlocking module 120 controls the door handle to deploy. After the flush door handle is deployed, the electric door can be opened through mechanical manual pulling or through triggering via a capacitive switch, depending on types of the door handle. Additionally, for the flush door handle, the switch on the door handle can only be pressed to transmit the door opening signal after the flush door handle has been deployed, enabling the electric door to open normally.

According to an embodiment of the present disclosure, the door unlocking module 120 is further configured to: receive deployment feedback information of the door handle; and continuously control the door handle to deploy until the door handle is correctly deployed and control the door handle to remain in a deployed state, in response to receiving no deployment feedback information or determining that the door handle has not been correctly deployed based on the deployment feedback information.

Specifically, after the door unlocking module 120 controls the door handle to deploy, the door handle provides feedback to the door unlocking module 120 on whether the door handle has been deployed, which enables the door unlocking module 120 to receive the deployment feedback information of the door handle and therefore determine a current deployment state of the door handle based on the deployment feedback information. In other words, when the door unlocking module 120 receives the door handle deployment instruction and controls the door handle to deploy, the door handle may fail to be successfully deployed in one attempt, or may fail to be deployed to a correct position. Therefore, in response to receiving no deployment feedback information or determining that the door handle has not been correctly deployed based on the deployment feedback information, the door handle can be continuously controlled to deploy until the door handle is correctly deployed, improving reliability of deployment control of the door handle when the vehicle collision occurs. The door handle being correctly deployed means that the door handle has been deployed to the correct position, i.e., a fully deployed position as designed at the factory for the door handle of the vehicle.

When the deployment feedback information of the door handle is received, it is unnecessary to transmit the door handle deployment instruction to the door unlocking module 120, indicating that the door handle has already been deployed. In this case, the door unlocking module 120 no longer controls the door handle to be deployed.

Additionally, after the door handle is correctly deployed, the door handle can be controlled to remain in the deployed state to facilitate an operation by the user or another person, such as manually pulling the door handle or touching the capacitive switch on the door handle to open the electric door.

According to an embodiment of the present disclosure, the control system for the electric door can further include a collision controller. The central controller 110 is further connected to the collision controller. The collision controller is configured to, in response to receiving the vehicle collision signal, obtain a state of the electric door and a vehicle state, perform timing, and transmit the central virtual unlocking instruction to the central controller 140. The collision controller is further configured to transmit, when the timing reaches a predetermined time period, the state of the electric door is a locked state, the vehicle state is a stationary state or no vehicle speed signal is received, and after central control virtual unlocking is successful, the vehicle collision signal to the central controller 140. The predetermined time period can be determined as desired.

Specifically, the control system for the electric door may further include a collision controller, such as, an Auto Controlled Unit (ACU), and the central controller 140 is connected to the collision controller. In some embodiments, the collision controller may be a vehicle collision sensor. The collision controller can be configured to obtain, in response to receiving the vehicle collision signal, the state of the electric door and the vehicle state after the vehicle experiences a collision. The vehicle collision signal can be generated when the vehicle experiences the collision. For example, in some embodiments, the vehicle collision signal can be issued by the vehicle collision sensor. That is, when the vehicle experiences a frontal collision, a side collision, a rear collision, a rollover, or a pedestrian collision, the vehicle collision sensor issues the vehicle collision signal based on an intensity of the collision. The state of the electric door may include a locked state (such as semi-locked or fully locked) and an unlocked state. The vehicle state may include a stationary state, a moving state, etc. The timing is performed, and the central virtual unlocking instruction is transmitted to the central controller 140, in response to receiving the vehicle collision signal.

The collision controller can be configured to transmit, when the timing reaches the predetermined time period, e.g., the predetermined time period may be set to 10 seconds and the timing reaches 10 seconds, the state of the electric door is the locked state (semi-locked or fully locked), the vehicle state is the stationary state or no vehicle speed signal is received (treated as the vehicle state being the stationary state), and after the central control virtual unlocking is successful, the vehicle collision signal to the central controller 140. A purpose of setting the predetermined time period to 10 seconds is to reduce or prevent situations that the electric door is triggered to open inside or outside the vehicle in rollover-type traffic accidents. An association with the vehicle speed signal primarily aims to prevent the driver and the passenger from being thrown out during vehicle movements. In some embodiments, the collision controller can be configured to directly transmit the vehicle collision signal to the central controller 140 in response to receiving the vehicle collision signal.

In an embodiment of the present disclosure, a transmission manner of the vehicle collision signal between the collision controller and the central controller 140 includes wired transmission and/or wireless transmission. The wired transmission can include transmitting the vehicle collision signal using a Pulse Width Modulation (PWM) signal. The wireless transmission may include transmitting the vehicle collision signal using a Controller Area Network (CAN). During an operation, when the collision controller transmits the vehicle collision signal to the central controller 140, both the wired transmission and the wireless transmission can be used. The two transmission manners can serve as backups and redundancies for each other.

According to an embodiment of the present disclosure, the door unlocking module 120 is further configured to: transmit the door unlocking instruction to a door lock motor of the electric door, to control the electric door to be unlocked; obtain a state of the electric door when a quantity of transmissions of the door unlocking instruction reaches a predetermined quantity; and stop transmitting the door unlocking instruction to the door lock motor of the electric door when the state of the electric door is an unlocked state. The predetermined quantity can be determined as desired.

Specifically, the door unlocking module 120 is further configured to transmit the door unlocking instruction to the door lock motor of the electric door, in such a manner that after the door lock motor receives the door unlocking instruction, the electric door can be controlled by the door unlocking module 120 to be unlocked. For example, when the electric door is in the locked state, the electric door can be unlocked after the unlocking instruction is received, in such a manner that automatic unlocking of the electric door can be enabled in the event of the vehicle collision. Thus, when the vehicle experiences a collision accident, the electric door needs to be in the unlocked state, which facilitates the driver and the passenger to open the electric door and leave the accident scene to avoid further injuries, or facilitates the rescuer to rescue the driver and the passenger inside the vehicle.

In some embodiments, the door unlocking instruction can be transmitted based on a predetermined frequency. For example, the door unlocking instruction is transmitted to the door lock motor of the electric door at 2-second intervals. The predetermined quantity is preset. When the quantity of transmissions of the door unlocking instruction reaches the predetermined quantity, the state of the electric door is obtained. The state of the electric door refers to the locked state or the unlocked state of the electric door. In some embodiments, the predetermined quantity may be set to 2. When the quantity of transmissions of the door unlocking instruction reaches 3, the state of the electric door can be obtained through the door unlocking module 120. Alternatively, the predetermined quantity may be set to 3. When the quantity of transmissions of the door unlocking instruction reaches 4, the state of the electric door can be obtained through the door unlocking module 120.

To avoid a door lock switch of vehicle being accidentally triggered into the unlocked state or the locked state, the predetermined quantity is set. When the quantity of transmissions of the door unlocking instruction exceeds the predetermined quantity, a current state of the electric door is obtained to enable more accurate and reliable control of the electric door.

When the state of the electric door is the unlocked state, transmitting the door unlocking instruction to the door lock motor of the electric door can be stopped. The unlocked state can refer to a state in which the passenger or the rescuer can directly open the electric door. For example, in some embodiments, the unlocked state of the electric door can include an electric door lock switch being open and an electric door handle being popped out. Stopping transmitting the door unlocking instruction to the door lock motor of the electric door means that after the quantity of transmissions exceeds the predetermined quantity and when the electric door is in the unlocked state, the door unlocking module 120 no longer needs to transmit the door unlocking instruction to the door lock motor of the electric door.

Additionally, if the current state of the electric door is the locked state, the door unlocking instruction can continue to be transmitted to the door lock motor of the electric door to unlock the electric door. In some embodiments, to ensure a service life of the door lock motor, the quantity of transmissions of the door unlocking instruction can be set to 10.

In some embodiments, to ensure normal operations of the door switch 110, the door unlocking module 120, the door control module 130, and the central controller 140, and to guarantee that these modules can still operate normally when a main power source has no electricity, a backup power source can be provided to supply power, enhancing a redundancy level of the control system for the electric door. The main power source is connected to each of the door switch 110, the door unlocking module 120, the door control module 130, and the central controller 140. A power supply state of the main power source includes a normal state and an abnormal state. The normal state can refer to a smooth connection between the main power source and each of the door switch 110, the door unlocking module 120, the door control module 130, and the central controller 140. The abnormal state can refer to an interruption in the connection between the main power source and each of the door switch 110, the door unlocking module 120, the door control module 130, and the central controller 140. In the embodiments of the present disclosure, the power supply state of the main power source can be determined by a voltage detection device connected between the main power source and the door switch 110, the door unlocking module 120, the door control module 130, and the central controller 140. When the vehicle collision occurs, or in some other scenarios where the main power source cannot supply power, the backup power source is used for power supply. In some embodiments, the main power source and the backup power source can be independent power sources. In some embodiments, to reduce costs while ensuring that the electric door can be normally and reliably unlocked, the backup power source can be connected only to the door unlocking module 120 and the door control module 130, ensuring executions of unlocking and opening operations on the electric door.

As a specific example, as illustrated in FIG. 2, control of the electric door may include the following operations.

A collision signal can be transmitted via the CAN to the collision controller ACU. The collision controller ACU is configured to continuously transmit the collision signal to the central controller CEM via a PWM hardwire and the CAN for 4 seconds. When the collision signal is generated, prerequisite conditions are required: obtaining the state of the electric door and the vehicle state, performing timing, and transmitting the central virtual unlocking instruction to the central controller CEM. When the timing reaches the predetermined time period, the state of the electric door is the locked state, the vehicle state is the stationary state or no vehicle speed signal is received, and after the central control virtual unlocking is successful, the collision controller ACU transmits the vehicle collision signal to the central controller CEM.

The central controller CEM is configured to continuously transmit the collision signal to the door unlocking module DM via the CAN for 10 seconds. When the central controller CEM restarts due to a voltage drop, the central controller CEM still transmits the vehicle collision signal. Further, the central controller CEM is configured to determine whether the door unlocking module DM and the door control module POD are online, and continuously transmit a collision unlock signal for 10 seconds and continuously transmit a door handle deployment activation signal for 10 seconds.

The unlocking module DM is configured to drive the door lock motor for 200 milliseconds per activation, for a minimum of three times and a total of ten times. The first three times are independent of a state of the door lock motor, while the remaining seven times are dependent on the state of the door lock motor. The door unlocking module DM can be configured to drive the door lock motor of the vehicle to be activated and the door handle of the vehicle to be popped out or pivoted. The door unlocking module DM is configured to receive the deployment feedback information of the door handle, continuously control the door handle to deploy until the door handle is correctly deployed and control the door handle to remain in the deployed state, in response to receiving no deployment feedback information or determining that the door handle has not been correctly deployed based on the deployment feedback information. When the door handle is in the deployed state, pulling the door handle or pressing the capacitive switch on the door handle by the user allows the door switch to be activated, to transmit the door opening signal to each of the central controller CEM, the door unlocking module DM, and the door control module POD.

When the door unlocking module DM is in the online state and the door control module POD is in the offline state (not online), the door unlocking instruction and the door opening permission instruction are transmitted to the door unlocking module DM. When the door unlocking module DM receives the door opening signal, the door unlocking instruction, and the door opening permission instruction, the electric door is controlled to be unlocked (e.g., the door lock is currently in a semi-locked state or a fully-locked state), and the electric door is driven to open by the first distance (which is realized through driving the latch by the door lock motor to create a gap), allowing the user to manually pull open the electric door (corresponding to a dashed arrow part in FIG. 2). Additionally, after the door handle is popped out, the electric door can be opened by pulling the door handle from outside the vehicle.

When the door unlocking module DM is in the online state and the door control module POD is in the online state, the door unlocking instruction is transmitted to the door unlocking module DM, and the door opening permission instruction is transmitted to the door control module POD. The door unlocking module is configured to control, in response to receiving the door unlocking instruction, the electric door to be unlocked (e.g., the door lock is currently in the semi-locked state or the fully-locked state). The door control module DM is further configured to control, in response to receiving the door opening permission instruction, the electric door to open by the second distance (which is realized through pushing the electric door open by the ejection motor), enabling the automatic opening of the electric door.

A 12V main battery is connected to each of the collision controller ACU, the central controller CEM, the door unlocking module DM, the door control module POD, the door switch, the door lock motor, the ejection motor, and the door handle of the vehicle. A 12V backup battery is connected to each of the central controller CEM, the door unlocking module DM, the door control module POD, the door switch, the door lock motor, the ejection motor, and the door handle of the vehicle. In this way, when the 12V main battery cannot supply power, the 12V backup battery can provide power supply, enhancing the redundancy level of the control system for the electric door.

In summary, with the control system for the electric door for the vehicle according to the embodiments of the present disclosure, the central controller is configured to obtain, in response to receiving the vehicle collision signal and the door opening signal of the door switch, the state of the door unlocking module and the state of the door control module, and transmit the door unlocking instruction and the door opening permission instruction to the door unlocking module when the door unlocking module is in the online state and the door control module is in the offline state. The door unlocking module is configured to, in response to receiving the door unlocking instruction and the door opening permission instruction, control the electric door to be unlocked and drive the electric door to open by the first distance, to enable the user to manually pull open the electric door. Thus, the control system can solve the problems with the unlocking and the opening of the electric door under the collision and extreme collision conditions, improving the reliability of the unlocking and the opening of the electric door.

Corresponding to the above embodiments, the present disclosure further provides a vehicle.

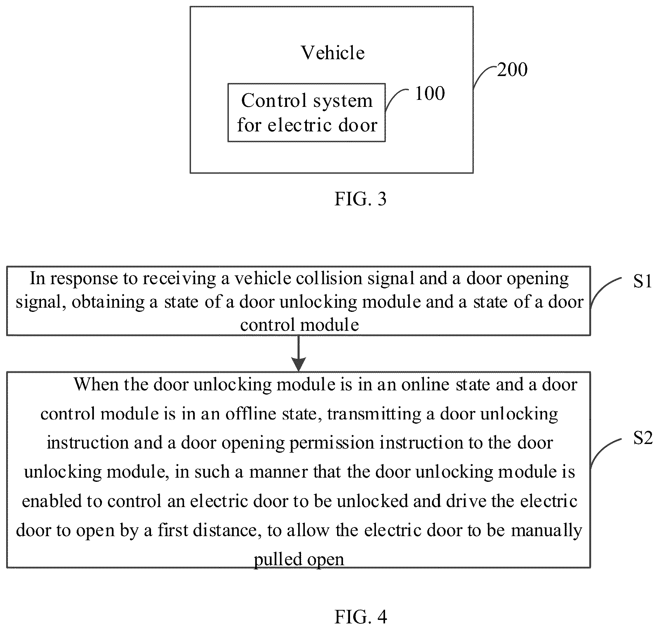

As illustrated in FIG. 3, a vehicle 200 according to the embodiments of the present disclosure can include a control system 100 for an electric door.

By including the above control system for the electric door, the vehicle according to the embodiments of the present disclosure can solve the problems with the unlocking and the opening of the electric door under the collision and extreme collision conditions, improving the reliability of the unlocking and the opening of the electric door.

Corresponding to the above embodiments, the present disclosure further provides a control method for an electric door.

As illustrated in FIG. 4, in an embodiment, the control method for the electric door includes the following operations.

At S1, in response to receiving a vehicle collision signal and a door opening signal, a state of a door unlocking module and a state of a door control module are obtained.

At S2, when the door unlocking module is in an online state and a door control module is in an offline state, a door unlocking instruction and a door opening permission instruction are transmitted to the door unlocking module, in such a manner that the door unlocking module is enabled to control an electric door to be unlocked and drive the electric door to open by a first distance, to allow the electric door to be manually pulled open.

It should be noted that, details not disclosed in the control method for the electric door according to the embodiments of the present disclosure can refer to the details disclosed in the control system for the electric door according to the embodiments of the present disclosure, and thus details thereof will be omitted here.

In summary, with the control method for the electric door according to the embodiments of the present disclosure, the state of the door unlocking module and the state of the door control module are obtained in response to receiving the vehicle collision signal and the door opening signal. When the door unlocking module is in the online state and the door control module is in the offline state, the door unlocking instruction and the door opening permission instruction are transmitted to the door unlocking module, in such a manner that the door unlocking module is enabled to control the electric door to be unlocked and drive the electric door to open by the first distance, to allow the electric door to be manually pulled open. Thus, the method can solve the problems with the unlocking and the opening of the electric door under the collision and extreme collision conditions, improving the reliability of the unlocking and the opening of the electric door.

It should be noted that, the logics and/or operations represented in the flowchart or described otherwise herein can be for example considered as a list of ordered executable instructions for implementing logic functions, and can be embodied in any computer-readable medium that is to be used by or used with an instruction execution system, apparatus, or device (such as a computer-based system, a system including a processor, or any other system that can retrieve and execute instructions from an instruction execution system, apparatus, or device). For the present disclosure, a "computer-readable medium" can be any apparatus that can contain, store, communicate, propagate, or transmit a program to be used by or used with an instruction execution system, apparatus, or device. More specific examples of computer-readable mediums include, as a non-exhaustive list: an electrical connector (electronic device) with one or more wirings, a portable computer disk case (magnetic devices), a Random Access Memory (RAM), a Read Only Memory (ROM), an Erasable Programmable Read Only Memory (EPROM or flash memory), a fiber optic device, and a portable Compact Disk Read Only memory (CDROM). In addition, the computer-readable medium may even be paper or other suitable medium on which the program can be printed, as the program can be obtained electronically, e.g., by optically scanning the paper or the other medium, and then editing, interpreting, or otherwise processing the scanning result when necessary, and then stored in a computer memory.

It should be understood that each part of the present disclosure may be realized by hardware, software, firmware, or a combination thereof. In the above embodiments, a plurality of operations or methods can be realized by software or firmware stored in the memory and executed by an appropriate instruction execution system. For example, when it is realized by the hardware, likewise in another embodiment, the operations or methods may be realized by one or a combination of the following techniques known in the art: a discrete logic circuit having a logic gate circuit for realizing a logic function of a data signal, an application-specific integrated circuit having an appropriate combination logic gate circuit, a Programmable Gate Array (PGA), a Field Programmable Gate Array (FPGA), etc.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

In addition, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as, two or three, unless otherwise specifically defined.

In the present disclosure, unless otherwise clearly specified and limited, terms such as "install", "connect", "connect to", or "fix" should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

Although embodiments of the present disclosure have been shown and described above, it should be understood that the above embodiments are merely exemplary, and cannot be construed to limit on the present disclosure. For those skilled in the art, changes, modifications, substitutions, and variations can be made to the embodiments without departing from the scope of the present disclosure.

## Claims

1. A control system for an electric door, the control system comprising: a door switch, a door unlocking module, a door control module, and a central controller, each of the door switch, the door unlocking module, and the door control module being connected to the central controller, wherein:
the central controller is configured to obtain, in response to receiving a vehicle collision signal and a door opening signal of the door switch, a state of the door unlocking module and a state of the door control module, and transmit a door unlocking instruction and a door opening permission instruction to the door unlocking module when the door unlocking module is in an online state and the door control module is in an offline state; and
the door unlocking module is configured to, in response to receiving the door unlocking instruction and the door opening permission instruction, control the electric door to be unlocked and drive the electric door to open by a first distance, to enable a user to manually pull open the electric door.

2. The system according to claim 1, wherein:
the door switch is further connected to the door unlocking module; and
the door unlocking module is further configured to, in response to receiving the door opening signal, the door unlocking instruction, and the door opening permission instruction, control the electric door to be unlocked and drive the electric door to open by the first distance.

3. The system according to claim 1 or 2, wherein:
the central controller is further configured to transmit, when each of the door unlocking module and the door control module is in the online state, the door unlocking instruction to the door unlocking module and the door opening permission instruction to the door control module;
the door unlocking module is further configured to control, in response to receiving the door unlocking instruction, the electric door to be unlocked; and
the door control module is further configured to control, in response to receiving the door opening permission instruction, the electric door to open by a second distance, to enable automatic opening of the electric door, wherein the second distance is greater than the first distance.

4. The system according to claim 3, wherein the door switch is further connected to each of the door unlocking module and the door control module, wherein:
the door unlocking module is further configured to control, in response to receiving the door opening signal and the door unlocking instruction, the electric door to be unlocked; and
the door control module is further configured to control, in response to receiving the door opening signal and the door opening permission instruction, the electric door to open by the second distance.

5. The system according to any one of claims 1 to 4, wherein:
the central controller is further configured to transmit, in response to receiving a central control virtual unlocking instruction, a door handle deployment instruction to the door unlocking module; and
the door unlocking module is further configured to control, in response to receiving the door handle deployment instruction, a door handle to deploy.

6. The system according to claim 5, wherein the door unlocking module is further configured to: receive deployment feedback information of the door handle; and continuously control the door handle to deploy until the door handle is correctly deployed and control the door handle to remain in a deployed state, in response to receiving no deployment feedback information or determining that the door handle has not been correctly deployed based on the deployment feedback information.

7. The system according to claim 5 or 6, further comprising a collision controller, the central controller being further connected to the collision controller, wherein:
the collision controller is configured to, in response to receiving the vehicle collision signal, obtain a state of the electric door and a vehicle state, perform timing, and transmit the central virtual unlocking instruction to the central controller; and
the collision controller is further configured to transmit, when the timing reaches a predetermined time period, the state of the electric door is a locked state, the vehicle state is a stationary state or no vehicle speed signal is received, and after central control virtual unlocking is successful, the vehicle collision signal to the central controller.

8. The system according to any one of claims 1 to 7, wherein the door unlocking module is further configured to: transmit the door unlocking instruction to a door lock motor of the electric door, to control the electric door to be unlocked; obtain a state of the electric door when a quantity of transmissions of the door unlocking instruction reaches a predetermined quantity; and stop transmitting the door unlocking instruction to the door lock motor of the electric door when the state of the electric door is an unlocked state.

9. A vehicle, comprising the control system for the electric door according to any one of claims 1 to 8.

10. A control method for an electric door, comprising:
in response to receiving a vehicle collision signal and a door opening signal, obtaining a state of a door unlocking module and a state of a door control module; and
when the door unlocking module is in an online state and the door control module is in an offline state, transmitting a door unlocking instruction and a door opening permission instruction to the door unlocking module, in such a manner that the door unlocking module is enabled to control the electric door to be unlocked and drive the electric door to open by a first distance, to allow the electric door to be manually pulled open.
